# EUROPEAN PATENT SPECIFICATION

(11) **EP 1 305 606 B1**
(45) Date of publication and mention of the grant of the patent: **07.09.2005**
(21) Application number: 01984348.1
(22) Date of filing: 25.07.2001
(51) Int. Cl.: G01N 21/77, G01N 21/45

(54) **SENSOR DEVICE**
SENSOR
EQUIPEMENT DE DETECTION

(30) Priority: 25.07.2000 GB 0018156
(43) Date of publication of application: 02.05.2003
(73) Proprietor: Farfield Sensors Ltd., Salford M6 6AJ (GB)
(72) Inventor: FREEMAN, Neville John, Utkinton, Tarporley CW6 0XA (GB); RONAN, Gerard Anthony Fairfield Sensors Limited, Salford M6 6AJ (GB); BARRACLOUGH, Paul Manchester Int. Office Ctr., Wythenshawe Manchester M22 5WB (GB); SWANN, Marcus Fairfield Sensors Limited, Salford M6 6AJ (GB)
(74) Representative: Stuttard, Garry Philip
(86) International application number: PCT/GB2001/003348
(87) International publication number: WO 2002/008736

(56) References cited:
- WO-A-93/20430
- GB-A- 2 228 082
- US-A- 5 465 151
- US-A- 5 917 966

## Description

The present invention relates to a sensor device and to a method for detecting the introduction of (eg the amount or concentration of) or changes in a chemical, biological or physical stimulus of interest in a localised environment, in particular to a sensor device and method for detecting the presence of or changes in chemical stimuli in a liquid or gas phase analyte (eg a microanalyte).

Conventional sensor devices for the detection of a chemical stimulus in an analyte (eg a microanalyte) frequently fail to provide the desired level of sensitivity and/or selectivity. Drawbacks are particularly apparent in for example biosensing applications where so-called non-specific (*ie* undesirable background) events may mask the measured response of the sensor device to the analyte. In addition, for high precision applications, the temperature of the localised environment may become critical to the stability of the measurement. In addition small signals may be swamped by large changes in refractive index of the medium in the localised environment.

Interferometric optical chemical or biochemical sensors comprising a measurement arm and a reference arm built onto the name surface of a common substrate are known: US-A-5917966 discloses a sensor for determining the concentration of certain hydrocarbons in an engine's exhaust gas. WO-A-93/20430 discloses a sensor for performing immunoassay of a fluid. US-A-5465151 discloses chemical and biosensors. GB-A-2228082 discloses a chemical sensor with a waveguide.

The present invention provides a sensor device adapted to compensate for non-specific events and tolerate fluctuations in the ambient environment (eg ambient temperature) by incorporating an optical "bridge" between two sensor components in intimate contact with an analyte. More particularly, the sensor device uses the optical properties of a specialised architecture incorporating the bridge to exhibit improved reliability, improved signal to noise ratio (sensitivity) and robustness.

Thus viewed from one aspect the present invention provides a sensor device for detecting the introduction of or changes in a stimulus (eg a chemical, physical or biological stimulus) of interest in a localised environment, said sensor device comprising:
a first sensor component including either (1) a sensing waveguide capable of exhibiting a measurable response to a change in the localised environment caused by the introduction of or changes in the stimulus of interest or (2) one or more sensing layers capable of inducing a measurable response to a change in the localised environment caused by the introduction of or changes in the stimulus of interest;
a second sensor component including either (1) an inactive (eg deactivated) waveguide substantially incapable of exhibiting a measurable response to a change in the localised environment caused by the introduction of or changes in the stimulus of interest or (2) one or more inactive (eg deactivated) layers substantially incapable of inducing a measurable response to a change in the localised environment caused by the introduction of or changes in the stimulus of interest;
wherein the sensor device is arranged so as to expose to the localised environment (1) at least a part of the (or each) sensing layer or the sensing waveguide of the first sensor component and (2) at least a part of the (or each) inactive layer or the inactive waveguide of the second sensor component, characterised in that the first and second sensor components are discretely built onto separate substrates whereby the localised environment constitutes a gap between the first and second sensor component into which the stimulus of interest is introduced so as to expose to the stimulus of interest at least a part of the (or each) sensor layer or the sensing waveguide of the first sensor component and at least a part of the (or each) inactive layer of the second sensor component.

By simultaneously exposing to the localised environment the first and second sensor components, the effect of thermal fluctuations and non-specific events (eg non-specific binding) may be compensated for (eg effectively cancelled out). This may be achieved by measuring the optical response of the first component relative to the optical response of the second component. In this way, the sensor device of the invention is tolerant to fluctuations in ambient conditions (eg ambient temperature) and capable of compensating for random physico-chemical events (unrelated to the stimulus of interest) thereby optimising the field of use.

Preferably the sensor device comprises: means for measuring the optical response (to the change in the localised environment caused by the introduction of or changes in the stimulus of interest) of the first sensor component relative to the optical response of the second sensor component.

The sensor device of the invention may be used to detect the introduction of or changes in a chemical, physical or biological stimulus. The interaction of the stimulus with the sensing waveguide or sensing layer may be a binding interaction or absorbance or any other interaction.

The sensor device of the invention is adapted to be usable in evanescent mode or whole waveguide mode. Generally speaking, it is known to make use of the evanescent field component of electromagnetic radiation incident on a waveguide structure (ie the field which extends outside the guiding region) to sense discrete changes in optical properties (see *inter alia* GB-A-2228082, US-A-5262842, WO-A-97/12225 and GB-A-2307741). This method relies on "leakage" of optical signals from the waveguide structure into a sensing layer. The evanescent component of the optical signal being guided by the waveguide structure is typically small leading to limited interrogation of the sensing layer.

Thus in a first embodiment of the sensor device, the first sensor component includes one or more sensing layers capable of inducing in a secondary waveguide a measurable response to a change in the localised environment caused by the introduction of or changes in the stimulus of interest and the second sensor component includes one or more inactive layers substantially incapable of inducing in a secondary waveguide a measurable response to a change in the localised environment caused by the introduction of or changes in the stimulus of interest.

In this first embodiment the sensor device is advantageously adapted to optimise the evanescent component so as to induce in the secondary waveguide a measurable optical response. The first component may comprise a plurality of separate sensing layers to enable events at different localised environments to be detected.

To optimise the performance of the first embodiment, the physical, biological and chemical properties of the sensing layer and inactive layer are as similar as possible (with the exception of the response to the change in the localised environment caused by the introduction of or changes in the stimulus of interest). It is preferred that the secondary waveguide and inactive secondary waveguide have identical properties.

In a second embodiment of the invention, the first sensor component includes a sensing waveguide capable of exhibiting a measurable response to a change in the localised environment caused by the introduction of or changes in the stimulus of interest and the second sensor component includes a inactive waveguide substantially incapable of exhibiting a measurable response to a change in the localised environment caused by the introduction of or changes in the stimulus of interest.

In this second embodiment, the sensor device is adapted to minimise the evanescent component and may be used advantageously in a whole waveguide mode. The first sensor component may comprise a plurality of sensing waveguides each of which is laid down in a layered fashion.

To optimise the performance of the second embodiment, the physical, biological and chemical properties of the sensing waveguide and inactive waveguide are as similar as possible (with the exception of the response to the change in the localised environment caused by the introduction of or changes in the stimulus of interest).

In a preferred sensor device of the invention, the sensing layer comprises an absorbent material (eg a polymeric material such as polysiloxane) or a bioactive material (eg containing antibodies, enzymes, DNA fragments, functional proteins or whole cells). The absorbent material may be capable of absorbing gases, liquids or vapours containing a chemical stimulus of interest. The bioactive material may be appropriate for liquid or gas phase biosensing.

In a preferred sensor device of the invention, the sensing waveguide comprises an absorbent material (eg a polymeric material such as polymethylmethacrylate, polysiloxane, poly-4-vinylpyridine) or a bioactive material (eg containing antibodies, enzymes, DNA fragments, functional proteins or whole cells). The sensing waveguide may comprise a porous silicon material optionally biofunctionalised with antibodies, enzymes, DNA fragments, functional proteins or whole cells.

As discussed above, the physical and chemical properties of the sensing layer/sensing waveguide are tailored so as to be as similar as possible to those of the inactive layer/inactive waveguide (with the exception of the response to the change in the localised environment caused by the introduction of or changes in the stimulus of interest). The following are examples of this general principle:
(1) where the sensing waveguide/sensing layer comprises a specific biofunctional material, the inactive waveguide/inactive layer may comprise the same bioactive material which has been made inactive (eg denatured for example thermally, photolytically or chemically)
(2) where the sensing waveguide/sensing layer comprises a certain optical isomer (eg a left handed isomer), the inactive waveguide/inactive layer may comprise the complimentary optical isomer (eg the right handed isomer). In this case, the left and right handed isomers may exhibit marked differences in response to a chemical or biological stimulus and so the system may be useful as a chemical sensor device or as a biosensor device
(3) where the sensing waveguide/sensing layer comprises an absorbent poly-4-vinylpyridine absorbent layer (hydrophillic), the inactive waveguide/inactive layer may comprise an absorbent polyisobutylene layer (hydrophobic). In this case, the stimuli of interest may be polar molecules such as water or alcohols.

In a preferred sensor device of the invention, the secondary waveguide comprises silicon oxynitride or silicon nitride.: The inactive secondary waveguide may comprise silicon oxynitride of silicon nitride (so as to have identical properties to the secondary waveguide).

Where the first sensor component of the sensor device of the invention comprises a sensing waveguide adapted for use in whole waveguide mode, an absorbent layer in the form of an overcoating may be present for use as a membrane (for example) to separate out stimuli of interest.

Preferably the (or each) waveguide of the first and/or second sensor component is a planar waveguide (*ie* a waveguide which permits light propagation in any arbitrary direction within the plane). Preferably, the first and second sensor components of the sensor device of the invention constitute a multi-layered structure (eg a laminate structure). In this sense, the sensor device is simple to fabricate and fault tolerant in terms of construction errors. In a preferred embodiment, the plurality of layers in each of the first and second sensor component are built onto a substrate (eg composed of silicon) through known processes such as PECVD, LPCVD, etc. Such processes are highly repeatable and lead to accurate manufacture. Intermediate transparent layers may be added (eg silicon dioxide) if desired. Typically the first and second sensor component are multilayered structures of thickness in the range 0.2-10 microns.

The first and second sensor components are be discretely built onto separate substrates (a "dual sensor") and the localised environment constitutes a gap between the first and second sensor component which the analyte may fill so as to expose.to the analyte at least a part of the (or each) sensing layer or the sensing waveguide of the first component and at least a part of the (or each) inactive layer or the inactive waveguide of the second component. For example, a spacer such as a microstructure may be positioned to provide a gap between the surfaces of the first and second sensor components. In certain cases, the surface tension in a liquid phase analyte may be sufficient to maintain the gap between the first and second sensor component. The gap is typically less than 10 microns.

The sensor device may comprise one or more means for intimately exposing to the localised environment at least a part of the (or each) sensing layer or the sensing waveguide and at least a part of the (or each) inactive layer or the inactive waveguide, said means being optionally integrated onto the first and/or second sensor component.

The one or more means for intimately exposing to the localised environment at least a part of the (or each) sensing layer or the sensing waveguide and at least a part of the (or each) inactive layer or the inactive waveguide (and any additional functionality) may be provided in a microstructure positionable on the surface of and in intimate contact with the first and/or second sensor component. Preferably the microstructure comprises means for intimately exposing to the localised environment at least a part of the (or each) sensing layer or the sensing waveguide and at least a part of the (or each) inactive layer or the inactive waveguide in the form of one or more microchannels and/or microchambers into which chemicals may be fed (or chemical reactions may take place).

In a preferred embodiment, the means for intimately exposing to the localised environment at least a part of the (or each) sensing layer or the sensing waveguide and at least a part of the (or each) inactive layer or the inactive waveguide is included in a cladding layer. For example, microchannels and/or microchambers may be etched into the cladding layer. The cladding layer may perform optical functions such as preventing significant discontinuities at the boundary of the sensing waveguide or chemical functions such as restricting access of species to the sensing waveguide. The cladding layer may be integrated onto the first and/or second sensor component.

Preferably, the whole of or a portion of any additional functionality may be included in the cladding layer. Additionally, the sensing layer may be incorporated in the cladding layer in the form of an absorbent material. Particularly preferably, the whole additional functionality may be provided in the cladding layer and include devices such as for example quadrature electric field tracks or other microfluidic devices.

The sensor device of the invention may advantageously be used to detect the presence of or changes in a chemical stimuli in an analyte which is introduced into the sensor device (ie a chemical sensor device). For example, a gaseous or liquid phase analyte comprising chemical stimuli may be introduced into the sensor device. Alternatively, a chemical reaction may take place which effects changes in the nature of the chemical stimuli in situ and causes a change in the localised environment.

The sensor device of the invention may be used to measure inter alia pressure, position, temperature or vibration in relation to the presence of or changes in a physical stimulus (ie a physical sensor device). The physical stimulus may be applied to the sensing layer or sensing waveguide of the first sensor component via an impeller (for example) located on the sensing layer or sensing waveguide to enable the measurement of (for example) pressure or precise position.

As a consequence of the introduction of or changes in a physical, biological and/or chemical stimulus in the localised environment (ie a change in the refractive index of material in the localised environment), changes in the dielectric properties (eg the effective refractive index) of the sensing waveguide or sensing layer occur. This causes a measurable optical response (ie a change in the transmission of electromagnetic radiation down the sensing waveguide (or waveguides) in whole waveguide mode or the secondary waveguide in evanescent field mode). For example, changes in the refractive index of material in the localised environment might occur as a consequence of a chemical reaction.

An interference pattern may be generated when the electromagnetic radiation from the sensor component is coupled into free space and the pattern may be recorded in a conventional manner (see for example WO-A-98/22807). In this embodiment, a measurable optical response of the sensor component to a change in the localised environment manifests itself as movement of the fringes in the interference pattern. The phase shift of the radiation in the sensor component (eg induced in the secondary waveguide in evanescent field mode or exhibited in the sensing waveguide in whole waveguide mode) may be calculated from the movement in the fringes. In turn, the amount of or changes in a chemical, biological or physical stimulus in the localised environment may be calculated from the phase shift.

Electromagnetic radiation generated from a conventional source may be propagated into the first and second sensor component in a number of ways. In the preferred embodiment, radiation is simply input via an end face of the sensor component (this is sometimes described as "an end firing procedure"). Preferably (but not essentially), the electromagnetic radiation source provides incident electromagnetic radiation having a wavelength falling within the visible range. Preferably the sensor device comprises: propagating means for substantially simultaneously propagating incident electromagnetic radiation into the first and second sensor components. Typically the same amount of radiation is propagated into each of the first and second sensor components. For example, one or more coupling gratings or mirrors may be used. A tapered end coupler rather than a coupling grating or mirror may be used to propagate light into the lowermost waveguide.

The incident electromagnetic radiation may be oriented (eg plane polarised) as desired using an appropriate polarising means. The incident electromagnetic radiation may be focussed if desired using a lens or similar micro-focussing means.

Using electromagnetic radiation of different frequencies (either simultaneously or sequentially) may vary the contribution of the sensor components and may further enhance the utility of the device.

Multimode excitation may provide useful additional information. By comparing the outer and inner areas of the interference pattern, it may be possible to determine the extent to which any refractive index change has been induced by changes in the thickness of the outer regions (eg the absorbing layer) and the degree to which it has been effected by physico-chemical changes in the inner regions.

Both the TE (transverse electric) and the TM (transverse magnetic) excitation modes may be used sequentially or simultaneously to interrogate the sensor device as described for example in WO-A-01/36946 (Farfield Sensors Limited). In this sense, the sensor device comprises: first irradiating means for irradiating the sensor components with TM mode electromagnetic radiation and second irradiating means for irradiating the first and second sensor components with TE mode electromagnetic radiation. The relative phase changes of the two modes are used to identify and quantify the nature of the optical changes taking place in the sensing layer or sensing waveguide. For example, it may be possible to attribute changes in the effective refractive index of the sensing layer or sensing waveguide to specific changes in dimension (eg expansion or contraction) and/or composition. The relative phase changes of the two modes may also be used to identify such changes taking place in subsequent layers when more compact structures are employed. Conveniently, measurement of capacitance and refractive mode index of the two modes yields further information on changes occurring in the absorbent layer.

Transverse electric and transverse magnetic phase shifts may be compared sequentially or simultaneously in order to resolve effective thickness changes from changes in the effective refractive index in realtime on the sensor device.

Electromagnetic radiation may be modulated (amplitude, frequency or phase for example) to provide additional information on the behaviour of the sensor device.

The first sensor component may be excited across its width and a two-dimensional photodiode array (or the like) may be used to effectively interrogate "strips" of the sensor (eg an array sensor). This may be carried out across more than one axis simultaneously or sequentially to provide spatially resolved information relating to events on the surface of the first sensor component.

The sensor components may be optionally perturbed (eg thermally perturbed) to enable the sensor device to be biased. This enables the precise degree of optical response (eg phase shift) caused by the chemical or physical stimulus to be determined.

Movement in the interference fringes may be measured either using a single detector which measures changes in the electromagnetic radiation intensity or a plurality of such detectors which monitor the change occurring in a number of fringes or the entire interference pattern. The one or more detectors may comprise one or more photodetectors. Where more than one photodetector is used this may be arranged in an array.

In an embodiment of the device, the electromagnetic radiation source and one or more detectors are integrated with the device into a single assembly.

A plurality of electromagnetic radiation detector units (eg in an array) and/or a plurality of electromagnetic radiation sources may be used to measure in discrete areas of the first sensor component simultaneously the responses to changes in the localised environment. Alternatively, the position of the electromagnetic radiation detector and electromagnetic radiation source relative to the sensor component may be changed to provide information concerning responses in discrete areas of the first sensor component. For example, discrete responses to a change in the localised environment caused by the presence of the same or different stimuli may be measured in discrete areas of the first sensor component. In the first instance, concentration gradients of the same stimulus may be deduced. In the second instance, discrete responses in different regions to changes in the localised environment may be measured. For this purpose, the preferred device makes use of the versatility of the evanescent mode and comprises a plurality of separate sensing layers or regions.

Conveniently, electrodes positioned in contact with a surface of the sensing layer or sensing waveguide enable capacitance to be measured simultaneously. The electrodes may take the form of either parallel plates laid alongside the plurality of planar waveguides or as an interdigitated or meander system laid down on the top and bottom surfaces of the sensing waveguide or sensing layer or adjacent to it. In the case of a meander system, the metal forming the electrode is responsible for absorbing excessive amounts of light and as such the capacitance is measured on an adjacent structure which is not utilised for optical measurement.

Viewed from a further aspect the present invention provides a method for detecting the introduction of (eg the amount or concentration of) or changes in a chemical, biological or physical stimulus of interest in a localised environment, said method comprising:
providing a sensor device as hereinbefore defined;
introducing or causing changes in the chemical, biological or physical stimulus of interest in the localised environment;
irradiating simultaneously the first and second sensor component with electromagnetic radiation;
measuring a relative optical response being the optical response of the first sensor component relative to the second sensor component; and
relating the relative optical response to the presence of or changes in the chemical, biological or physical stimulus of interest.

Preferably the method of the invention comprises:
measuring movements in the interference pattern; and relating the movements to the presence of or changes in the chemical, biological or physical stimulus of interest.

Preferably the method of the invention comprises:
measuring a plurality of discrete responses in different regions of the first sensor component.

Preferably the method of the invention is carried out in evanescent or whole waveguide mode. Preferably multiple irradiation sources and/or multiple detectors are used.

In a preferred embodiment, the method comprises:
continuously introducing the analyte containing a chemical stimulus of interest. In a particularly preferred embodiment, the method comprises: continuously introducing the analyte containing a chemical stimulus of interest in a discontinuous flow (eg as a train of discrete portions).

Preferably the method further comprises: inducing a chemical reaction in the analyte which is static in the localised environment.

Preferably the method further comprises: calculating the phase shift from the movements in the interference pattern and relating the phase shift to the amount (eg concentration) of or changes in the chemical stimulus of interest. Methods for performing this calculation will be familiar to those skilled in the art. The phase shift data may be related to the amount (eg concentration) of or changes in the chemical stimulus of interest by comparison with standard calibration data.

Viewed from a yet further aspect the present invention provides an apparatus comprising a plurality of sensor devices as hereinbefore defined arranged in an array.

Viewed from an even still further aspect of the present invention there is provided the use of a sensor device according to the first aspect of the invention for detecting the presence of or changes in a chemical, biological or physical stimulus of interest in a localised environment.

Viewed from a yet still further aspect the present invention provides a kit of parts comprising:
a sensor device as hereinbefore defined, an electromagnetic radiation source capable of simultaneous irradiation of the first sensor component and second sensor component and one or more detectors in an array. The kit of the invention can be easily assembled in a robust and fault tolerant manner.

The term "optical" used hereinbefore means radiation of any wavelength in the electromagnetic spectrum or the selective absence of such radiation (as in obscuration devices).

The invention will now be described in a non-limitative sense with reference to the accompanying Figures in which:
Figure 1 represents a schematic illustration of a sensor device in accordance with an embodiment of the invention (whole waveguide mode);
Figure 2 represents a schematic illustration of a biosensor device of an embodiment of the invention (evanescent field mode).

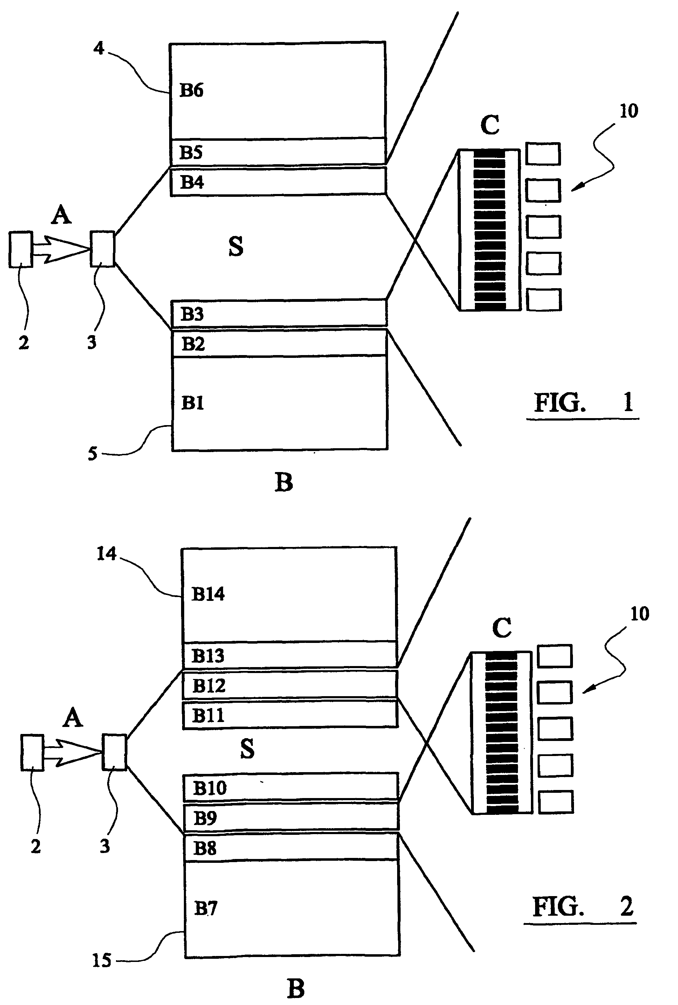

A whole waveguide sensor device B of the invention is illustrated schematically in Figure 1. It is of the dual sensor type and may be used for detecting the presence of polar molecules in an analyte S (eg the presence of water, an alcohol, ammonia, etc).

The analyte S is introduced into the gap (typically of the order of 10 microns or less) between a first and a second sensor component 5 and 4 of the sensor device B. The first sensor component 5 comprises a silicon dioxide layer B2 and a sensing waveguide B3 fabricated on a silicon substrate B1. The sensing waveguide B3 is an absorbent polymer poly-4-vinylpyridine (P4VP) which is hydrophillic. The second sensor component 4 comprises a silicon dioxide layer B5 and an inactive waveguide B4 fabricated on a silicon substrate B6. The inactive waveguide B4 is an absorbent polymer polyisobutylene which is hydrophobic.

The analyte S is introduced into the sensor B in the gap between the first and second sensor components 5 and 4 so as to expose at least a part of the sensing waveguide B3 and at least a part of the inactive waveguide B4 to the analyte S. The purpose of the inactive waveguide B4 is to respond to non-specific events in an essentially identical manner to the sensing waveguide B3 but not to respond to polar molecules. For example, both polymers swell to a similar degree in response to temperature fluctuations but only P4VP binds to polar molecules.

Plane polarised electromagnetic radiation (A) is generated by an electromagnetic source (not shown) and is focussed using a lens 2 and orientated using a polariser 3. The radiation A passes into the first and second sensor components 5 and 4 of the sensor device B ie into the sensing waveguide B3 and the inactive waveguide B4 simultaneously such that the level of radiation entering the inactive waveguide B4 is approximately the same as that entering the sensing waveguide layer B3.

Having passed down the sensor structure, the electromagnetic radiation is coupled into free space generating an interference pattern C recorded using a photodetector array 10. The interference pattern C is used to determine the relative phase shift exhibited by the sensing waveguide B3 when compared to the inactive waveguide B4. The relative phase shift is directly proportional to changes occurring in the material of the sensing waveguide B3 caused by interaction with polar molecules in the analyte S.

The interferometric sensor device illustrated in evanescent field mode in Figure 2 is a biosensor device of the invention. It is of the dual biosensor type and may be used (for example) to detect the presence of hCG in an analyte S (eg a blood or urine sample).

The analyte S (eg blood or urine) is introduced into the gap between a first and a second sensor component 15 and 14 of the sensor device B. The first sensor component 15 comprises a silicon dioxide layer B8 and a silicon oxynitride (or silicon nitride) secondary waveguide B9 fabricated on a silicon substrate B7. The evanescent component of the secondary waveguide B9 probes a sensing layer B10 and changes in the refractive index of the sensing layer B10 effect the transmission of radiation through the secondary waveguide B9. The sensing layer B10 in this embodiment comprises a biotin/avidin functionalised surface treated with protein G and anti-hCG. The second sensor component 14 comprises a silicon dioxide layer B13 and a silicon oxynitride (or silicon nitride) inactive waveguide B12 fabricated on a silicon substrate B14. Adjacent to the inactive waveguide B12 is an inactive layer B11. The inactive layer B11 comprises a biotin/avidin functionalised surface treated with protein G and anti-hCG which has been heat denatured.

The analyte S (eg blood) is introduced into the sensor B in the gap between the first and second sensor components 15 and 14 so as to expose at least a part of the sensing layer B10 and at least a part of the inactive layer B11 to the analyte S. The purpose of the inactive layer B11 is to respond to non-specific events in an essentially identical manner to the sensing layer B10 but not to respond to hCG.

Plane polarised electromagnetic radiation (A) is generated by an electromagnetic source (not shown) and is focussed using a lens 2 and orientated using a polariser 3. The radiation A passes into the first and second sensor components 15 and 14 of the sensor device B, in particular into the secondary waveguide B9 and the inactive waveguide B12 simultaneously such that the level of radiation entering the inactive waveguide B12 is approximately the same as that entering the secondary waveguide B9.

Having passed down the sensor structure, the electromagnetic radiation is coupled into free space generating an interference pattern C recorded using a photodetector array 10. The interference pattern C is used to determine the relative phase shift induced in the secondary waveguide B9 when compared to the inactive waveguide B12. The relative phase shift is directly proportional to changes occurring in the material of the sensing layer B10 caused by interaction with the analyte S.

## Claims

1. A sensor device (B) for detecting the introduction of or changes in a stimulus of interest in a localised environment, said sensor device comprising:
a first sensor component (5, 15) including either (1) a sensing waveguide (B3) capable of exhibiting a measurable response to a change in the localised environment caused by the introduction of or changes in the stimulus of interest or (2) one or more sensing layers (B10) capable of inducing a measurable response to a change in the localised environment caused by the introduction of or changes in the stimulus of interest; a second sensor component (4, 14) including either (1) an inactive waveguide (B4) substantially incapable of exhibiting a measurable response to a change in the localised environment caused by the introduction of or changes in the stimulus of interest or (2) one or more inactive layers (B11) substantially incapable of inducing a measurable response to a change in the localised environment caused by the introduction of or changes in the stimulus of interest; wherein the sensor device is arranged so as to expose to the localised environment (1) at least a part of the (or each) sensing layer or the sensing waveguide of the first sensor component and (2) at least a part of the (or each) inactive layer or the inactive waveguide of the second sensor component **characterised in that** component,
**characterised in that** the first (5, 15) and second sensor components (4, 14) are discretely built onto separate substrates (B7, B1, B14, B6) whereby the localised environment constitutes a gap between the first and second sensor component into which the stimulus of interest is introduced so as to expose to the stimulus of interest at least a part of the (or each) sensor layer (B10) or the sensing waveguide (B3) of the first sensor component and at least a part of the (or each) inactive layer (B11) or the inactive waveguide (B4) of the second sensor component.

2. A sensor device (B) as claimed in claim 1 further comprising: means (10) for measuring an optical response of the first sensor component (5, 15) relative to an optical response of the second sensor component (4, 14).

3. A sensor device (B) as claimed in claim 1 or 2 adapted to be usable in evanescent mode or whole waveguide mode.

4. A sensor device (B) as claimed in any preceding claim wherein the first sensor component (15) includes:
one or more sensing layers (B10) capable of inducing in a first secondary waveguide (B9) a measurable response to a change in the localised environment caused by the introduction of or changes in the stimulus of interest,
and the second sensor component (14) includes:
one or more inactive layers (B11) substantially incapable of inducing in a second secondary waveguide (B12) a measurable response to a change in the localised environment caused by the introduction of or changes in the stimulus of interest.

5. A sensor device (B) as claimed in claim 4 wherein the physical, biological and chemical properties of the (or each) sensing layer (B10) and the (or each) inactive layer (B11) are substantially identical with the exception of the response to the change in the localised environment caused by the introduction of or changes in the stimulus of interest.

6. A sensor device (B) as claimed in claim 4 or 5 wherein the first secondary waveguide (B9) and second secondary waveguide (B12) have identical properties.

7. A sensor device (B) as claimed in any of claims 4, 5 or 6 wherein the sensing layer (B10) comprises an absorbent material or a bioactive material.

8. A sensor device (B) as claimed in claim 7 wherein the absorbent material is capable of absorbing gases, liquids or vapours containing a chemical stimulus of interest.

9. A sensor device (B) as claimed in claim 7 or 8 wherein the absorbent material is polymeric.

10. A sensor device (B) as claimed in claim 7, 8 or 9 wherein the absorbent material is polysiloxane.

11. A sensor device (B) as claimed in claim 7 wherein the bioactive material contains antibodies, enzymes, DNA fragments, functional proteins or whole cells.

12. A sensor device (B) as claimed in any of claims 1 to 3 wherein the first sensor component (5) includes:
a sensing waveguide (B3) capable of exhibiting a measurable response to a change in the localised environment caused by the introduction of or changes in the stimulus of interest, and the second sensor component (4) includes:
an inactive waveguide (B4) substantially incapable of exhibiting a measurable response to a change in the localised environment caused by the introduction of or changes in the stimulus of interest.

13. A sensor device (B) as claimed in claim 12 wherein the physical, biological and chemical properties of the sensing waveguide (B3) and inactive waveguide (B4) are substantially identical with the exception of the response to the change in the localised environment caused by the introduction of or changes in the stimulus of interest.

14. A sensor device (B) as claimed in claim 12 or 13 wherein the sensing waveguide (B3) comprises an absorbent material or a bioactive material.

15. A sensor device (B) as claimed in claim 14 wherein the sensing waveguide (B3) comprises a porous silicon material optionally biofunctionalised with antibodies, enzymes, DNA fragments, functional proteins or whole cells.

16. A sensor device (B) as claimed in claim 14 or 15 wherein the absorbent material is polymeric.

17. A sensor device (B) as claimed in any of claims 14, 15 or 16 wherein the absorbent material is polymethylmethacrylate, polysiloxane or poly-4-vinylpyridine.

18. A sensor device (B) as claimed in claim 14 wherein the bioactive material contains antibodies, enzymes, DNA fragments, functional proteins or whole cells.

19. A sensor device (B) as claimed in claim 1 wherein the sensing waveguide/sensing layer (B3/B10) comprises a bioactive material and the inactive waveguide/inactive layer (B4/B11) comprises the same bioactive material which has been made inactive.

20. A sensor device (B) as claimed in claim 19 wherein the bioactive material has been made inactive by denaturing.

21. A sensor device (B) as claimed in claim 19 or 20 wherein the bioactive material has been made inactive thermally, photolytically or chemically.

22. A sensor device (B) as claimed in claim 1 wherein the sensing waveguide/sensing layer (B3/B10) comprises a first optical isomer and the inactive waveguide/inactive layer (B4/B11) comprises a second optical isomer, wherein the first optical isomer is complementary to the second optical isomer.

23. A sensor device (B) as claimed in claim 1 wherein one of the sensing waveguide/sensing layer (B3/B10) or the inactive waveguide/inactive layer (B4/B11) comprises a hydrophillic layer and the other comprises a hydrophobic layer.

24. A sensor device (B) as claimed in claim 23 wherein one of the sensing waveguide/sensing layer (B3/B10) or the inactive waveguide/inactive layer (B4/B11) comprises an absorbent poly-4-vinylpyridine layer and the other comprises an absorbent polyisobutylene layer.

25. A sensor device (B) as claimed in any preceding claim wherein each waveguide of the first (5, 15) and/or second sensor component (4, 14) is a planar waveguide.

26. A sensor device (B) as claimed in claim 25 wherein each of the first (5, 15) and second sensor components (4, 14) constitute a multi-layered structure.

27. A sensor device (B) as claimed in claim 26 wherein each of the first (5, 15) and second sensor components (4, 14) constitute a laminate structure.

28. A sensor device as claimed in any preceding claim wherein the first sensor component (5) consists essentially of a sensing waveguide (B3) and optionally at least one silicon dioxide layer (B2) fabricated onto a first silicon substrate (B1) and the second sensor component (4) consists essentially of an inactive waveguide (B4) and optionally at least one silicon dioxide layer fabricated onto a second silicon substrate (B6).

29. A sensor device as claimed in claim 28 wherein
(1) the sensing waveguide (B2) and inactive waveguide (84) are adapted to swell to a substantially identical degree in response to a temperature fluctuation;
(2) the sensing waveguide is adapted to swell in the presence of the stimulus of interest; and
(3) the inactive waveguide is adapted not to swell in the presence of the stimulus of interest.

30. A sensor device as claimed in any preceding claim wherein the first sensor component (15) is fabricated onto a first silicon substrate (B7) and consists essentially of a sensing layer (B10) in intimate contact with a first secondary waveguide (B9) and optionally at least one silicon dioxide layer (B8) and the second sensor component (14) is fabricated onto a second silicon substrate (B14) and consists essentially of an inactive layer (B11) in intimate contact with a second secondary waveguide (B12) and optionally at least one silicon dioxide layer (B13).

31. A sensor device as claimed in claim 30 wherein the sensing layer (B10) is a biotin/avidin functionalised layer treated with protein G and anti-hCG and the inactive layer (B11) is a biotin/avidin functionalised surface treated with protein G and anti-hCG which has been denatured.

32. A method for detecting the introduction of or changes in a chemical, biological or physical stimulus of interest in a localised environment, said method comprising:
providing a sensor device (B) as defined in any preceding claim;
introducing or causing changes in the chemical, biological or physical stimulus of interest in the localised environment;
irradiating simultaneously the first and second sensor component with electromagnetic radiation;
measuring a relative optical response being the optical response of the first sensor component relative to the second sensor component; and
relating the relative optical response to the presence of or changes in the chemical, biological or physical stimulus of interest.

33. A method as claimed in claim 32 wherein the relative optical response is movements in an interference pattern.

34. A method as claimed in claim 32 or 33 comprising:
continuously introducing an analyte containing a chemical stimulus of interest into the localised environment.

35. A method as claimed in claim 34 comprising: continuously introducing the analyte in a discontinuous flow.

36. A method as claimed in any of claims 32 to 35 comprising: inducing a chemical reaction in an analyte containing a chemical stimulus of interest which is static in the localised environment.

37. A method as claimed in any of claims 33 to 36 comprising:
calculating the phase shift from the movements in the interference pattern and relating the phase shift to the amount of or changes in the stimulus of interest.

## Patentansprüche

1. Sensorvorrichtung (B) zur Bestimmung des Einsetzens eines oder Änderungen in einem Stimulus von Interesse in einer lokalisierten Umgebung, wobei die Sensorvorrichtung das Folgende umfasst:
eine erste Sensorkomponente (5,15), die entweder (1) einen Mess-Wellenleiter (B3), der dazu in der Lage ist, eine messbare Reaktion auf eine Änderung in der lokalisierten Umgebung anzuzeigen, die durch das Einsetzen des oder Änderungen in dem Stimulus von Interesse verursacht worden ist, oder (2) eine oder mehrere Messschichten (B10), die dazu in der Lage ist/sind, eine messbare Reaktion auf eine Änderung in der lokalisierten Umgebung zu induzieren, die durch das Einsetzen des oder Änderungen in dem Stimulus von Interesse verursacht worden sind, enthält; eine zweite Sensorkomponente (4, 14), die entweder (1) einen inaktiven Wellenleiter (B4), der im Wesentlichen nicht dazu in der Lage ist, eine messbare Reaktion auf eine Änderung in der lokalisierten Umgebung anzuzeigen, die durch Einsetzen des oder Änderungen in dem Stimulus von Interesse verursacht worden ist, oder (2) eine oder mehrere inaktive Schichten (B11), die im Wesentlichen nicht in der Lage ist/sind, eine messbare Reaktion auf eine Änderung in der lokalisierten Umgebung zu induzieren, die durch das Einsetzen des oder Änderungen in dem Stimulus von Interesse verursacht worden ist, enthält; wobei die Sensorvorrichtung so angeordnet ist, dass (1) zumindest ein Teil der (oder jeder) Messschicht oder des Mess-Wellenleiters der ersten Sensorkomponente und (2) zumindest ein Teil der inaktiven Schicht (oder jeder inaktiven Schicht) oder des inaktiven Wellenleiters der zweiten Sensorkomponente der lokalisierten Umgebung ausgesetzt ist,
**dadurch gekennzeichnet, dass** die erste (5, 15) und zweite Sensorkomponente (4, 14) diskret auf getrennte Substrate (B7, B1, B14, B6) gebaut sind, wodurch die lokalisierte Umgebung einen Spalt zwischen der ersten und zweiten Sensorkomponente bildet, in die der Stimulus von Interesse so eingeführt wird, dass zumindest ein Teil der (oder jeder) Messschicht (B10) oder des Mess-Wellenleiters (B3) der ersten Sensorkomponente und zumindest ein Teil der (oder jeder) inaktiven Schicht (B11) oder des inaktiven Wellenleiters (B4) der zweiten Sensorkomponente dem Stimulus von Interesse ausgesetzt ist.

2. Sensorvorrichtung (B) nach Anspruch 1, des Weiteren umfassend: Mittel (10) zur Messung einer optischen Reaktion der ersten Sensorkomponente (5, 15) relativ zu einer optischen Reaktion der zweiten Sensorkomponente (4, 14).

3. Sensorvorrichtung (B) nach Anspruch 1 oder 2, die so angepasst ist, dass sie im Abklingmodus oder im Vollmodus verwendbar ist.

4. Sensorvorrichtung (B) nach dem einem der voranstehenden Ansprüche, wobei die erste Sensorkomponente (15) Folgendes enthält:
eine oder mehrere Messschichten (B10), die dazu in der Lage ist/sind, eine messbare Reaktion auf eine Änderung in der lokalisierten Umgebung in einem ersten Sekundär-Wellenleiter (B9) zu induzieren, die durch das Einsetzen des oder Änderungen in dem Stimulus von Interesse verursacht worden ist,
und die zweite Sensorkomponente (14) Folgendes enthält:
eine oder mehrere inaktive Schichten (B11), die im Wesentlichen nicht dazu in der Lage ist/sind, eine messbare Reaktion auf eine Änderung in der lokalisierten Umgebung in einem zweiten Sekundär-Wellenleiter (B12) zu induzieren, die durch das Einsetzen des oder Änderungen in dem Stimulus von Interesse verursacht worden ist.

5. Sensorvorrichtung (B) nach Anspruch 4, wobei die physikalischen, biologischen und chemischen Eigenschaften der (oder jeder) Messschicht (B10) und der (oder jeder) inaktiven Schicht (B11) im Wesentlichen identisch sind mit der Ausnahme der Reaktion auf die Änderung in der lokalisierten Umgebung, die durch das Einsetzen des oder Änderungen in dem Stimulus von Interesse verursacht worden ist.

6. Sensorvorrichtung (B) nach Anspruch 4 oder 5, wobei der erste Sekundär-Wellenleiter (B9) und der zweite Sekundär-Wellenleiter (B12) identische Eigenschaften besitzen.

7. Sensorvorrichtung (B) nach einem der Ansprüche 4, 5 oder 6, wobei die Messschicht (B10) ein absorbierendes Material oder ein bioaktives Material umfasst.

8. Sensorvorrichtung (B) nach Anspruch 7, wobei das absorbierende Material dazu in der Lage ist, Gase, Flüssigkeiten oder Dämpfe zu absorbieren, die einen chemischen Stimulus von Interesse enthalten.

9. Sensorvorrichtung (B) nach Anspruch 7 oder 8, wobei das absorbierende Material polymer ist.

10. Sensorvorrichtung (B) nach Anspruch 7, 8 oder 9, wobei das absorbierende Material Polysiloxan ist.

11. Sensorvorrichtung (B) nach Anspruch 7, wobei das bioaktive Material Antikörper, Enzyme, DMA-Fragmente, funktionelle Proteine oder ganze Zellen enthält.

12. Sensorvorrichtung (B) nach einem der Ansprüche 1 bis 3, wobei die erste Sensorkomponente (5) Folgendes enthält:
einen Mess-Wellenleiter (B3), der dazu in der Lage ist, eine messbare Reaktion auf eine Änderung in der lokalisierten Umgebung anzuzeigen, die durch das Einsetzen des oder Änderungen in dem Stimulus von Interesse verursacht worden ist,
und die zweite Sensorkomponente (4) Folgendes enthält:
einen inaktiven Wellenleiter (B4), der im Wesentlichen nicht dazu in der Lage ist, eine messbare Reaktion auf eine Änderung in der lokalisierten Umgebung anzuzeigen, die durch das Einsetzen des oder Änderungen in dem Stimulus von Interesse verursacht worden ist.

13. Sensorvorrichtung (B) nach Anspruch 12, wobei die physikalischen, biologischen und chemischen Eigenschaften des Mess-Wellenleiters (B3) und des inaktiven Wellenleiters (B4) im Wesentlichen identisch sind mit der Ausnahme der Reaktion auf die Änderung in der lokalisierten Umgebung, die durch das Einsetzen des oder Änderungen in dem Stimulus von Interesse verursacht worden ist.

14. Sensorvorrichtung (B) nach Anspruch 12 oder 13, wobei der Mess-Wellenleiter (B3) ein absorbierendes Material oder ein bioaktives Material umfasst.

15. Sensorvorrichtung (B) nach Anspruch 14, wobei der Mess-Wellenleiter (B3) ein poröses Siliciummaterial umfasst, das gegebenenfalls mit Antikörpern, Enzymen, DNA-Fragmenten, funktionellen Proteinen oder ganzen Zellen biofunktionalisiert ist.

16. Sensorvorrichtung (B) nach Anspruch 14 oder 15, wobei das absorbierende Material polymer ist.

17. Sensorvorrichtung (B) nach einem der Ansprüche 14, 15 oder 16, wobei das absorbierende Material Polymethylmethacrylat, Polysiloxan oder Poly-4-vinylpyridin ist.

18. Sensorvorrichtung (B) nach Anspruch 14, wobei das bioaktive Material Antikörper, Enzyme, DNA-Fragmente, funktionelle Proteine oder ganze Zellen enthält.

19. Sensorvorrichtung (B) nach Anspruch 1, wobei der Mess-Wellenleiter/die Mess-Schicht (B3/B10) ein bioaktives Material umfasst und der inaktive Wellenleiter/die inaktive Schicht (B4/B11) dasselbe bioaktive Material umfasst, das inaktiv gemacht worden ist.

20. Sensorvorrichtung (B) nach Anspruch 19, wobei das bioaktive Material durch Denaturieren inaktiv gemacht worden ist.

21. Sensorvorrichtung (B) nach Anspruch 19 oder 20, wobei das bioaktive Material thermisch, photolytisch oder chemisch inaktiv gemacht worden ist.

22. Sensorvorrichtung (B) nach Anspruch 1, wobei der Mess-Wellenleiter/die Messschicht (B3/B10) ein erstes optisches Isomer umfasst und der inaktive Wellenleiter/die inaktive Schicht (B4/B11) ein zweites optisches Isomer umfasst, wobei das erste optische Isomer zum zweiten optischen Isomer komplementär ist.

23. Sensorvorrichtung (B) nach Anspruch 1, wobei eines aus dem Mess-Wellenleiter/der Mess-Schicht (B3/B10) oder dem inaktiven Wellenleiter/der inaktiven Schicht (B4/B11) eine hydrophile Schicht umfasst und das andere eine hydrophobe Schicht umfasst.

24. Sensorvorrichtung (B) nach Anspruch 23, wobei eines aus dem Mess-Wellenleiter/der Mess-Schicht (B3/B10) oder dem inaktiven Wellenleiter/der inaktiven Schicht (B4/B11) eine a-borbierende Poly-4-vinylpyridin-Schicht umfasst und das andere eine absorbierende Polyisobutylenschicht umfasst.

25. Sensorvorrichtung (B) nach einem der voranstehenden Ansprüche, wobei jeder Wellenleiter der ersten (5, 15) und/oder zweiten Sensorkomponente (4, 14) ein planarer Wellenleiter ist.

26. Sensorvorrichtung (B) nach Anspruch 25, wobei jede der ersten (5, 15) und zweiten Sensorkomponente (4, 14) eine mehrschichtige Struktur darstellt.

27. Sensorvorrichtung (B) nach Anspruch 26, wobei jede der ersten (5, 15) und zweiten Sensorkomponente (4, 14) eine Laminatstruktur darstellt.

28. Sensorvorrichtung nach einem der voranstehenden Ansprüche, wobei die erste Sensorkomponente (5) im Wesentlichen aus einem Mess-Wellenleiter (B3) und gegebenenfalls mindestens einer Siliciumdioxid-Schicht (B2) besteht, die auf einem ersten Siliciumsubstrat (B1) erzeugt worden ist/sind und die zweite Sensorkomponente (4) im Wesentlichen aus einem inaktiven Wellenleiter (B4) und gegebenenfalls mindestens einer Siliciumdioxid-Schicht besteht, die auf einem zweiten Siliciumsubstrat (B6) erzeugt worden ist/sind.

29. Sensorvorrichtung nach Anspruch 28, wobei (1) der Mess-Wellenleiter (B2) und der inaktive Wellenleiter (B4) so angepasst sind, dass sie in Reaktion auf eine Temperaturschwankung zu einem im Wesentlichen identischen Grad quellen;
(2) der Mess-Wellenleiter so angepasst ist, dass er in Gegenwart des Stimulus von Interesse quillt; und
(3) der inaktive Wellenleiter so angepasst ist, dass er in Gegenwart des Stimulus von Interesse nicht quillt.

30. Sensorvorrichtung nach einem der voranstehenden Ansprüche, wobei die erste Sensorkomponente (15) auf einem ersten Siliciumsubstrat (B7) erzeugt ist und im Wesentlichen aus einer Messschicht (B10) im innigen Kontakt mit einem ersten Sekundär-Wellenleiter (B9) und gegebenenfalls mindestens einer Siliciumdioxid-Schicht (B8) besteht und die zweite Sensorkomponente (14) auf einem zweiten Siliciumsubstrat (B14) erzeugt ist und im Wesentlichen aus einer inaktiven Schicht (B11) im innigen Kontakt mit einem zweiten Sekundär-Wellenleiter (B12) und gegebenenfalls mindestens einer Siliciumdioxid-Schicht (B13) besteht.

31. Sensorvorrichtung nach Anspruch 30, wobei die Messschicht (B10) eine Biotin/Avidin-funktionalisierte Schicht, behandelt mit Protein G und anti-hCG, ist, und die inaktive Schicht (B11) eine Biotin/Avidin-funktionalisierte Oberfläche, behandelt mit Protein G und anti-hCG, ist, das denaturiert worden ist.

32. Verfahren zum Detektieren des Einsetzens eines oder von Änderungen in einem chemischen, biologischen oder physikalischen Stimulus von Interesse in einer lokalisierten Umgebung, wobei das Verfahren Folgendes umfasst:
Bereitstellen einer Sensorvorrichtung (B) nach einem der voranstehenden Ansprüche;
Einsetzen des oder Verursachen von Änderungen in dem chemischen, biologischen oder physikalischen Stimulus von Interesse in die lokalisierte/der lokalisierten Umgebung;
gleichzeitiges Bestrahlen der ersten und zweiten Sensorkomponente mit elektromagnetischer Strahlung;
Messen einer relativen optischen Reaktion, die die optische Reaktion der ersten Sensorkomponente relativ zur zweiten Sensorkomponente ist; und
in-Bezug-Setzen der relativen optischen Reaktion auf die Gegenwart des oder auf Änderungen in dem chemischen, biologischen oder physikalischem Stimulus von Interesse.

33. Verfahren nach Anspruch 32, wobei die relative optische Reaktion Bewegungen in einem Interferenzmuster sind.

34. Verfahren nach Anspruch 32 oder 33, umfassend: kontinuierliches Einsetzen eines Analyten, der einen chemischen Stimulus von Interesse enthält, in die lokalisierte Umgebung.

35. Verfahren nach Anspruch 34, umfassend: kontinuierliches Einsetzen des Analyten in einem diskontinuierlichen Strom.

36. Verfahren nach einem der Ansprüche 32 bis 35, umfassend:
Induzieren einer chemischen Reaktion in einem Analyten, der einen chemischen Stimulus von Interesse enthält, der statisch ist, in der lokalisierten Umgebung.

37. Verfahren nach einem der Ansprüche 33 bis 36, umfassend:
Berechnen der Phasenverschiebung aus den Bewegungen in dem Interferenzmuster und in-Beziehung-Bringen der Phasenverschiebung mit der Menge an oder den Änderungen in dem Stimulus von Interesse.

## Revendications

1. Dispositif formant capteur (B) destiné à détecter l'introduction de ou des changements dans un stimulus d'intérêt dans un environnement localisé, ledit dispositif formant capteur comprenant :
◆ un premier composant formant capteur (5, 15) comprenant soit (1) un guide d'onde de détection (B3) capable de montrer une réaction mesurable à un changement dans l'environnement localisé provoqué par l'introduction de ou des changements dans le stimulus d'intérêt ou (2) une ou plusieurs couches de détection (B10) capables d'induire une réaction mesurable à un changement dans l'environnement localisé par l'introduction de ou des changements dans le stimulus d'intérêt ;
◆ un deuxième composant formant capteur (4, 14) comprenant soit (1) un guide d'onde inactif (B4) sensiblement incapable de montrer une réaction mesurable à un changement dans l'environnement localisé provoqué par l'introduction de ou des changements dans le stimulus d'intérêt ou (2) une ou plusieurs couches inactives (B11) sensiblement incapables d'induire une réaction mesurable à un changement dans l'environnement localisé provoqué par l'introduction de ou des changements dans le stimulus d'intérêt ;
dans lequel le dispositif formant capteur est agencé de manière à exposer à l'environnement localisé (1) au moins une partie de la (ou de chaque) couche de détection ou du guide d'onde de détection du premier composant formant capteur et (2) au moins une partie de la (ou de chaque) couche ou du guide d'onde inactif du deuxième composant formant capteur **caractérisé** dans ce composant,
**caractérisé en ce que** les premier (5, 15) et deuxième composants formant capteur (4, 14) sont construits discrètement sur des substrats distincts (B7, B1, B14, B6) moyennant quoi l'environnement localisé constitue un espace entre les premier et deuxième composants formant capteur dans lequel le stimulus d'intérêt est introduit de manière à exposer au stimulus d'intérêt au moins une partie de la (ou de chaque) couche de détection (B10) ou du guide d'onde de détection (B3) du premier composant formant capteur et au moins une partie de la (ou de chaque) couche inactive (B11) ou du guide d'onde inactif (B4) du deuxième composant formant capteur.

2. Dispositif formant capteur (B) selon la revendication 1 comprenant en outre des moyens (10) destinés à mesurer une réponse optique du premier composant formant capteur (5, 15) par rapport à une réponse optique du deuxième composant formant capteur (4, 14).

3. Dispositif formant capteur (B) selon la revendication 1 ou 2 adapté pour être utilisé en mode évanescent ou en mode de guide d'onde complet.

4. Dispositif formant capteur (B) selon l'une quelconque des revendications précédentes, dans lequel le premier composant formant capteur (15) comprend une ou plusieurs couches de détection (B10) capables d'induire dans un premier guide d'onde secondaire (B9) une réaction mesurable à un changement dans l'environnement localisé provoqué par l'introduction de ou des changements dans le stimulus d'intérêt, et le deuxième composant formant capteur (14) comprend une ou plusieurs couches inactives (B11) sensiblement incapables d'induire dans un deuxième guide d'onde secondaire (B12) une réponse mesurable à un changement dans l'environnement localisé provoqué par l'introduction de ou des changements dans le stimulus d'intérêt.

5. Dispositif formant capteur (B) selon la revendication 4, dans lequel les propriétés physiques, biologiques et chimiques de la (ou de chaque) couche de détection (B10) et la (ou chaque) couche inactive (B11) sont sensiblement identiques à l'exception de la réaction au changement dans l'environnement localisé provoqué par l'introduction de ou des changements dans le stimulus d'intérêt.

6. Dispositif formant capteur (B) selon la revendication 4 ou 5 dans lequel le premier guide d'onde secondaire (B9) et le deuxième guide d'onde secondaire (B12) présentent des propriétés identiques.

7. Dispositif formant capteur (B) selon l'une quelconque des revendications 4, 5 ou 6 dans lequel la couche de détection (B10) comprend un matériau absorbant ou un matériau bioactif.

8. Dispositif formant capteur (B) selon la revendication 7, dans lequel le matériau absorbant est capable d'absorber des gaz, des liquides ou des vapeurs contenant un stimulus chimique d'intérêt.

9. Dispositif formant capteur (B) selon la revendication 7 ou 8, dans lequel le matériau absorbant est un polymère.

10. Dispositif formant capteur (B) selon la revendication 7, 8 ou 9 dans lequel le matériau absorbant est un polysiloxane.

11. Dispositif formant capteur (B) selon la revendication 7, dans lequel le matériau bioactif contient des anticorps, des enzymes, des fragments d'ADN, des protéines fonctionnelles ou des cellules entières.

12. Dispositif formant capteur (B) selon l'une quelconque des revendications 1 à 3 dans lequel le premier composant formant capteur (5) comprend un guide d'onde de détection (B3) capable de montrer une réaction mesurable à un changement dans l'environnement localisé provoqué par l'introduction de ou des changements dans le stimulus d'intérêt, et le deuxième composant formant capteur (4) comprend un guide d'onde inactif (B4) sensiblement incapable de montrer une réaction mesurable à un changement dans l'environnement localisé provoqué par l'introduction de ou des changements dans le stimulus d'intérêt.

13. Dispositif formant capteur (B) selon la revendication 12 dans lequel les propriétés physiques, biologiques et chimiques du guide d'onde de détection (B3) et le guide d'onde inactif (B4) sont sensiblement identiques à l'exception de la réaction au changement dans l'environnement localisé provoqué par l'introduction de ou des changements dans le stimulus d'intérêt.

14. Dispositif formant capteur (B) selon la revendication 12 ou 13, dans lequel le guide d'onde de détection (B3) comprend un matériau absorbant ou un matériau bioactif.

15. Dispositif formant capteur (B) selon la revendication 14 dans lequel le guide d'onde de détection (B3) comprend un matériau de silicium poreux optionnellement biofonctionnalisé avec des anticorps, des enzymes, des fragments d'ADN, des protéines fonctionnelles ou des cellules entières.

16. Dispositif formant capteur (B) selon la revendication 14 ou 15 dans lequel le matériau absorbant est un polymère.

17. Dispositif formant capteur (B) selon l'une quelconque des revendications 14, 15 ou 16 dans lequel le matériau absorbant est un polyméthylméthacrylate, un polysiloxane ou un poly-4-vinylpyridine.

18. Dispositif formant capteur (B) selon la revendication 14, dans lequel le matériau bioactif contient des anticorps, des enzymes, des fragments d'ADN, des protéines fonctionnelles ou des cellules entières.

19. Dispositif formant capteur (B) selon la revendication 1, dans lequel le guide d'onde de détection/la couche de détection (B3/B10) comprend un matériau bioactif et le guide d'onde inactif/la couche inactive (B4/B11) comprend le même matériau bioactif qui a été rendu inactif.

20. Dispositif formant capteur (B) selon la revendication 19, dans lequel le matériau bioactif a été rendu inactif par dénaturation.

21. Dispositif formant capteur (B) selon la revendication 19 ou 20, dans lequel le matériau bioactif a été rendu inactif thermiquement, par photolyse ou chimiquement.

22. Dispositif formant capteur (B) selon la revendication 1, dans lequel le guide d'onde de détection/la couche de détection (B3/B10) comprend un premier isomère optique et le guide d'onde inactif/la couche inactive (B4/B11) comprend un deuxième isomère optique, dans lequel le premier isomère optique est complémentaire du deuxième isomère optique.

23. Dispositif formant capteur (B) selon la revendication 1, dans lequel un parmi le guide d'onde de détection/la couche de détection (B3/B10) ou le guide d'onde inactif/la couche inactive (B4/B11) comprend une couche hydrophile et l'autre comprend une couche hydrophobe.

24. Dispositif formant capteur (B) selon la revendication 23, dans lequel un parmi le guide d'onde de détection/la couche de détection (B3/B10) ou le guide d'onde inactif/la couche inactive (B4/B11) comprend une couche de poly-4-vinylpyridine absorbant et l'autre comprend une couche de polyisobutylène absorbant.

25. Dispositif formant capteur (B) selon l'une quelconque des revendications précédentes dans lequel chaque guide d'onde des premier (5, 15) et/ou deuxième composants formant capteur (4, 14) est un guide d'onde planaire.

26. Dispositif formant capteur (B) selon la revendication 25 dans lequel chacun des premier (5, 15) et deuxième composants formant capteur (4, 14) constitue une structure multicouche.

27. Dispositif formant capteur (B) selon la revendication 26, dans lequel chacun des premier (5, 15) et deuxième composants formant capteur (4, 14) constitue une structure stratifiée.

28. Dispositif formant capteur selon l'une quelconque des revendications précédentes dans lequel le premier composant formant capteur (5) est constitué essentiellement d'un guide d'onde de détection (B3) et optionnellement d'au moins une couche de dioxyde de silicium (B2) fabriquée sur un premier substrat de silicium (B1) et le deuxième composant formant capteur (4) consiste essentiellement en un guide d'onde inactif (B4) et optionnellement au moins une couche de dioxyde de silicium fabriquée sur un deuxième substrat de silicium (B6).

29. Dispositif formant capteur selon la revendication 28, dans lequel
(1) le guide d'onde de détection (B2) et le guide d'onde inactif (B4) sont adaptés pour enfler à un degré sensiblement identique en réponse à une fluctuation de température ;
(2) le guide d'onde de détection est adapté pour enfler en présence du stimulus d'intérêt ; et
(3) le guide d'onde inactif est adapté pour ne pas enfler en présence du stimulus d'intérêt.

30. Dispositif formant capteur selon l'une quelconque des revendications précédentes dans lequel le premier composant formant capteur (15) est fabriqué sur un premier substrat de silicium (B7) et consiste essentiellement en une couche de détection (B10) en contact intime avec un premier guide d'onde secondaire (B9) et optionnellement une couche de dioxyde de silicium (B8) et le deuxième composant formant capteur (14) est fabriqué sur un deuxième substrat de silicium (B14) et consiste essentiellement en une couche inactive (B11) en contact intime avec un deuxième guide d'onde secondaire (B12) et optionnellement au moins une couche de dioxyde de silicium (B13).

31. Dispositif formant capteur selon la revendication 30, dans lequel la couche de détection (B10) est une couche fonctionnalisée de biotine/avidine traitée avec une protéine G et anti-hCG et la couche inactive (B11) est une surface fonctionnalisée de biotine/avidine traitée avec une protéine G et anti-hCG qui a été dénaturée.

32. Procédé destiné à détecter l'introduction de ou des changements dans un stimulus chimique, biologique ou physique d'intérêt dans un environnement localisé, ledit procédé comprenant les étapes consistant à :
◆ fournir un dispositif formant capteur (B) selon l'une quelconque des revendications précédentes ;
◆ introduire ou provoquer des changements dans le stimulus chimique, biologique ou physique d'intérêt dans l'environnement localisé ;
◆ irradier simultanément les premier et deuxième composants formant capteur avec un rayonnement électromagnétique ;
◆ mesurer une réponse optique relative qui est la réponse optique du premier composant formant capteur par rapport au deuxième composant formant capteur ; et
◆ relier la réponse optique relative à la présence du ou des changements dans le stimulus chimique, biologique ou physique d'intérêt.

33. Procédé selon la revendication 32, dans lequel la réponse optique relative représente des mouvements dans un modèle d'interférence.

34. Procédé selon la revendication 32 ou 33, comprenant l'étape consistant à introduire de manière continue une substance à analyser contenant un stimulus chimique d'intérêt dans l'environnement localisé.

35. Procédé selon la revendication 34, comprenant l'étape consistant à introduire de manière continue la substance à analyser dans un écoulement discontinu.

36. Procédé selon l'une quelconque des revendications 32 à 35, comprenant l'étape consistant à induire une réaction chimique dans une substance à analyser contenant un stimulus chimique d'intérêt qui est statique dans l'environnement localisé.

37. Procédé selon l'une quelconque des revendications 33 à 36, comprenant l'étape consistant à calculer le déphasage provenant des mouvements dans le diagramme d'interférence et relier le déphasage à la quantité de ou aux changements dans le stimulus d'intérêt.
